# EUROPÄISCHE PATENTSCHRIFT

(11) **EP 1 523 635 B1**
(45) Veröffentlichungstag und Bekanntmachung des Hinweises auf die Patenterteilung: **26.12.2007**
(21) Anmeldenummer: 03787669.5
(22) Anmeldetag: 15.07.2003
(51) Int. Cl.: F16K 31/00

(54) **VENTIL MIT KOMPAKTEM FORMGEDÄCHTNISLEGIERUNGSANTRIEB**
VALVE PROVIDED WITH A COMPACT SHAPE MEMORY ALLOY DRIVE
VANNE A ENTRAINEMENT COMPACT EN ALLIAGE A MEMOIRE DE FORME

(30) Priorität: 24.07.2002 DE 10233601
(43) Veröffentlichungstag der Anmeldung: 20.04.2005
(73) Patentinhaber: Aesculap AG & Co. KG, 78532 Tuttlingen (DE); Christoph Miethke GmbH & Co. KG, 14469 Potsdam (DE)
(72) Erfinder: BIEHL, Margit, 66606 St. Wendel (DE); MIETHKE, Christoph, 14469 Potsdam (DE)
(74) Vertreter: Hoeger, Stellrecht & Partner Patentanwälte
(86) Internationale Anmeldenummer: PCT/DE2003/002380
(87) Internationale Veröffentlichungsnummer: WO 2004/016975

(56) Entgegenhaltungen:
- DE-A- 3 731 146
- DE-A- 10 162 498
- US-A- 3 725 835
- US-A- 4 772 807

## Beschreibung

### Technisches Anwendungsgebiet

Die vorliegende Erfindung betrifft ein Ventil, das einen Grundkörper mit einer Durchlaßöffnung, einen beweglichen Ventilkörper zum Verschließen und Freigeben der Durchlaßöffnung und einen Betätigungsmechanismus umfaßt, mit dem der Ventilkörper zum Freigeben der Durchlassöffnung bewegt werden kann, wobei der Betätigungsmechanismus zumindest zwei am Grundkörper oder einem damit verbundenen Trägerkörper befestigte drahtförmige Elemente aus einer Formgedächtnislegierung aufweist, die sich bei Temperaturerhöhung auf eine Temperatur oberhalb einer Schwelltemperatur wechselseitig verkürzen lassen und so mit dem Ventilkörper in Wirkverbindung stehen, daß der Ventilkörper bei einseitiger Verkürzung des einen Elementes von einer stabilen Lage auf der Durchlaßöffnung in eine stabile Lage neben der Durchlaßöffnung und bei einseitiger Verkürzung des anderen Elementes wieder in die stabile Lage auf der Durchlaßöffnung bewegt werden kann.

Ventile spielen in vielen technischen Bereichen eine wichtige Rolle, um den Durchfluss eines Mediums zu steuern. Sie können ebenso zur Dosierung von festgelegten Volumina wie auch zur Bereitstellung oder Absperrung kontinuierlicher Fluidströme eingesetzt werden. Aktiv schaltende Ventile werden dabei unter Energiezufuhr vom geschlossenen in den geöffneten Zustand gebracht oder umgekehrt. Der Betätigungsmechanismus zum Öffnung und ggf. Schließen der Ventile soll in vielen Anwendungen möglichst wenig Raum und Energie beanspruchen.

### Stand der Technik

Aus der DE 38 35 788 A1 ist ein schnell schaltendes Kugelventil bekannt, das einen Grundkörper mit einer Durchlassöffnung, eine Kugel zum Verschließen und Freigeben der Durchlassöffnung und einen Betätigungsmechanismus umfasst, mit dem die Kugel zum Freigeben der Durchlassöffnung bewegt werden kann. In geschlossenem Zustand des Ventils wird die Kugel durch den anliegenden Druck der Gasströmung gegen die Durchlassöffnung gepresst. Zum Freigeben der Durchlassöffnung bewegt der Betätigungsmechanismus die Kugel von der Durchlassöffnung. Hierzu übt ein Betätigungselement des Betätigungsmechanismus einen seitlichen Stoß auf die Kugel aus, die sich daraufhin von der Durchlassöffnung bzw. dem Ventilsitz der Durchlassöffnung löst. Das Zurückstellen der Kugel auf den Ventilsitz erfolgt unter dem Einfluss der eingebrachten Gasströmung. Als Betätigungsmechanismus zum Verschieben der Kugel wird bei dieser Druckschrift ein impulsgetriebener Elektromagnet eingesetzt, der nach einer Betätigung durch eine Federkraft wieder in die Ausgangsposition zurückgezogen wird. Ein derartiger Betätigungsmechanismus mit einem Elektromagneten beansprucht jedoch erheblichen Bauraum und weist für viele Anwendungen einen zu hohen Energieverbrauch auf.

In W. Ehrfeld et. al.: "Mikroaktoren - Wirkprinzipien, Fertigungstechnologien und Applikationen" in Rainer Nordmann et al. (Hrsg.): Kolloquium Aktoren in Mechatronischen Systemen 11. März 1999, Seiten 14 - 16 ist ein schnell schaltendes Mikro-Kugelventil mit einer Kugelgröße von ca. 100 µm beschrieben, das durch einen piezokeramischen Multilayer-Aktor betätigt wird. Der Vorteil dieses Ventils besteht in der geringen Baugröße sowie dem geringen Energieverbrauch für den als Antrieb eingesetzten piezokeramischen Aktor gegenüber einem elektromagnetischen Antrieb. Ein Nachteil dieses piezokeramischen Aktors besteht jedoch darin, dass dieser nur Verschiebewege im µm-bereich erzeugen kann. Zur Betätigung der Kugel eines größeren Kugelventils ist dieser Betätigungsmechanismus daher nicht geeignet.

Auch bei dieser Ausgestaltung wird die Kugel nur kurzzeitig und impulshaft vom Ventilsitz gestoßen, um dann in Folge der Flüssigkeitsströmung wieder ihre ursprüngliche Position einzunehmen. Soll der geöffnete Ventilzustand über einen längeren Zeitraum aufrecht erhalten werden, so ist bei beiden vorgenannten Ventilen eine rasch aufeinander folgende, wiederholte Betätigung des Aktors erforderlich. Dadurch wird ständig Energie verbraucht, solange das Ventil geöffnet bleiben soll.

In den Druckschriften DE 199 61 736 A1, DE 39 35 474 A1, DE 37 44 240 A1 und DE 36 08 550 A1 werden Ventile beschrieben, die über piezoelektrische Aktoren zur Betätigung der Ventilkörper verfügen. So ist beispielsweise in der DE 199 61 736 A1 ein Ventil dargestellt, das über ein an einem piezoelektrischen Biegewandler gehaltenes Dichtelement verfügt, mit dem ein Ventilkanal verschließbar ist.

Die DE 100 62 704 A1 beschreibt ein elektromechanisches Bauelement mit wenigstens zwei Aktoren aus einer Formgedächtnis-Legierung, die bei Erreichen einer bestimmten Temperatur ihre Form ändern und sich änderungsbedingt bewegen. Ein wesentliches Merkmal des beschriebenen Bauelementes ist, dass die beiden Aktoren ihre Form jeweils bei unterschiedlichen Temperaturen ändern.

Die Druckschriften DE 697 09 529 T2, DE 199 63 499 A1, DE 43 22 731 A1, DE 36 35 216 A1, US 5 345 963 A, US 4 973 024 A und JP 61103081 A beschreiben Ventile gemäß dem Oberbegriff des Patentanspruchs 1, bei denen die aus einer Formgedächtnis-Legierung bestehenden, drahtförmigen Elemente während des Schließens oder Öffnens eines Ventils stets gegen ein weiteres Spannelement, vorzugsweise eine Feder, bewegt werden müssen. Die Bewegung des Ventilkörpers wird dabei in zumindest eine Richtung, also entweder das Öffnen oder das Schließen den Ventils, mit Hilfe eines zusätzlichen Federelementes bewirkt.

In der DE 37 31 146 A1 ist eine Antriebseinrichtung für einen Schalterantrieb beschrieben mit einem zweiteiligen Element aus einer Formgedächtnis-Legierung. Dabei sind Antriebselement aus der Formgedächtnis-Legierung in Richtung der Schaltbewegung angeordnet und benötigen dadurch eine erhebliche Baulänge. Eine Anwendung an einem Ventil ist in dieser Druckschrift nicht erwähnt.

Eine ähnliche Anordnung wird in der US-A-4,772,807 beschrieben, dabei wird ein Umschaltkörper einer Umschalteinrichtung durch Antriebselemente aus einer Formgedächtnis-Legierung zwischen zwei Schaltstellungen verschoben. Auch dabei ist eine erhebliche Baugröße der Antriebselemente notwendig, die in Bewegungsrichtung verlaufend angeordnet sind.

Es ist Aufgabe der vorliegenden Erfindung, ein gattungsgemäßes Ventil mit einem kompakten und energieeffizienten Betätigungsmechanismus bereitzustellen, der auch für Betätigungswege im Millimeterbereich einsetzbar ist.

Diese Aufgabe wird bei einem Ventil der eingangs beschriebenen Art erfindungsgemäß dadurch gelöst, daß sich die beiden drahtförmigen Elemente annähernd parallel zueinander und senkrecht zu einer Bewegungsrichtung des Ventilkörpers erstrecken und den zwischen den beiden drahtförmigen Elementen angeordneten Ventilkörper derart umspannen, daß sich der Ventilkörper bei verkürztem, geradlinigem Zustand des einen Elementes auf der Durchlassöffnung und bei verkürztem, geradlinigem Zustand des anderen Elementes neben der Durchlaßöffnung befindet.

Vorteilhafte Ausgestaltungen des Ventils sind Gegenstand der Unteransprüche oder lassen sich aus der nachfolgenden Beschreibung und den Ausführungsbeispielen entnehmen.

Das vorliegende Ventil weist in bekannter Weise einen Grundkörper mit einer Durchlassöffnung, einen beweglichen Ventilkörper zum Verschließen und Freigeben der Durchlassöffnung und einen Betätigungsmechanismus auf, mit dem der Ventilkörper zum Freigeben der Durchlassöffnung bewegt werden kann. Die Durchlassöffnung kann hierbei mit ihrem Rand selbst den Ventilsitz für den Ventilkörper bilden. Es kann selbstverständlich auch ein gesonderter Ventilsitz im Bereich der Durchlassöffnung ausgebildet sein, auf dem der Ventilkörper im geschlossenen Ventilzustand aufliegt. Beim vorliegenden Ventil setzt sich der Betätigungsmechanismus aus zumindest zwei am Grundkörper oder einem mit dem Grundkörper verbundenen Trägerkörper befestigten drahtförmigen Elementen aus einer Formgedächtnis-Legierung zusammen, die sich bei Temperaturerhöhung auf eine Temperatur oberhalb einer Schwelltemperatur wechselseitig verkürzen lassen. Die drahtförmigen Elemente stehen so mit dem Ventilkörper in Wirkverbindung, dass der Ventilkörper bei einseitiger Verkürzung des einen Elementes von einer stabilen Lage auf der Durchlassöffnung in eine stabile Lage neben der Durchlassöffnung und bei einseitiger Verkürzung des anderen Elementes wieder in die stabile Lage auf der Durchlassöffnung bewegt werden kann. Die Verkürzung erfolgt dabei jeweils durch impulshaftes Erhitzen des einen oder anderen Elementes. Die drahtförmigen Elemente können entweder direkt am Ventilkörper oder an einem Führungselement für den Ventilkörper befestigt sein. Ein derartiges Führungselement für den Ventilkörper kann bspw. ein die Kugel eines Kugelventils teilweise umschließendes Lagergehäuse darstellen.

Durch den Einsatz von drahtförmigen Elementen aus einer Formgedächtnis-Legierung (Shape-Memory-Alloy, SMA) lässt sich ein energieeffizienter und kompakter Betätigungsmechanismus für den Ventilkörper des Ventils realisieren. Formgedächtnis-Legierungen haben die Eigenschaft, ihre ursprüngliche Form nach Erwärmung auf eine Temperatur oberhalb einer Schwelltemperatur wieder einzunehmen. Dem Fachmann sind zahlreiche Metalllegierungen bekannt, wie bspw. TiNiPd, TiNi, CuAl, CuZnAl oder CuAlNi, die diese Eigenschaften aufweisen. Formgedächtnis-Legierungen haben mit Abstand die höchste mechanische Energiedichte, d. h. das höchste mechanische Arbeitsvermögen pro Volumeneinheit. Gerade mit drahtförmigen Elementen aus einer Formgedächtnis-Legierung, im Folgenden als SMA-Drähte bezeichnet, lässt sich die höchste Energieeffizienz erzielen. Diese SMA-Drähte ziehen sich bei Erwärmung, bspw. durch einen elektrischen Stromfluss, in Längsrichtung zusammen und können dabei mechanische Arbeit verrichten. Bei dem vorliegenden Ventil sind zumindest zwei derartiger SMA-Drähte erforderlich, da jeder SMA-Draht als Aktor nur in eine Richtung wirken kann. Die mechanische Energie, die von jedem der beiden Aktoren zur Verfügung gestellt werden kann, dient primär der Bewegung des Ventilkörpers, muss aber auch ausreichen, um den bereits verkürzten, entgegengesetzt wirkenden SMA-Draht wieder auf die ursprüngliche Länge zu dehnen. Aufgrund der hohen Energieeffizienz derartiger Formgedächtnis-Legierungen in drahtförmigem Zustand lässt sich das vorliegende Ventil mit minimalem Energieverbrauch betreiben. Ein weiterer Vorteil besteht darin, dass sich der vorliegende Betätigungsmechanismus, bei dem lediglich zwei SMA-Drähte angeordnet und zur Erwärmung bzw. Ansteuerung bspw. mit einem Strom beaufschlagt werden müssen, sehr kompakt und platzsparend realisieren lässt. Insbesondere sind mit diesem Betätigungsmechanismus nicht nur Bewegungen des Ventilkörpers im µm- sondern auch im mm- und cm-Bereich möglich.

In einer besonders vorteilhaften Ausgestaltung wird das vorliegende Ventil als Kugelventil mit binärer Öffnungscharakteristik realisiert. Der als Kugel ausgebildete Ventilkörper befindet sich hierbei in der Offenstellung und in der Schließstellung bei nicht aktiviertem Betätigungsmechanismus in der stabilen Lage, so dass für die Aufrechterhaltung des offenen und des geschlossenen Zustandes des Ventils keinerlei Energie aufgewendet werden muss. Dadurch wird Energie eingespart, da diese nur zum Umschalten zwischen der offenen und der geschlossenen Stellung benötigt wird, nicht aber zum Aufrechterhalten einer der beiden Endstellungen des Ventils. Der kugelförmige Ventilkörper liegt in der geschlossenen Ventilstellung auf der Durchlassöffnung dichtend auf und ruht in der geöffneten Stellung seitlich neben der Durchlassöffnung in einer Vertiefung des Grundkörpers. Der Betätigungsmechanismus verschiebt hierbei den Ventilkörper zwischen diesen beiden Positionen. Vorzugsweise werden die beiden stabilen Positionen des kugelförmigen Ventilkörpers durch ein elastisches Element, bspw. eine Schraubenfeder, unterstützt, das den Ventilkörper jeweils gegen die Durchlassöffnung bzw. die Vertiefung presst. In einer Ausgestaltung dieses Kugelventils mit binärer Öffnungscharakteristik wird eine Kugel mit einem Durchmesser von ca. 3 mm eingesetzt, die mit dem Betätigungsmechanismus um ca. 1,5 mm zwischen der offenen und der geschlossenen Stellung bewegt werden muss. Hierfür ist eine Anfangskraft von ca. 30 mN notwendig, die durch den vorliegend beschriebenen Betätigungsmechanismus ohne Weiteres aufgebracht werden kann.

Auch wenn in der vorliegenden Beschreibung sowie in den nachfolgenden Ausführungsbeispielen jeweils ein Kugelventil beschrieben wird, so ist dem Fachmann offensichtlich, dass sich das erfindungsgemäße Ventil auch in anderer Ausgestaltung, bspw. mit einem anders geformten Ventilkörper oder einer Ventilklappe als Ventilkörper realisieren lässt.

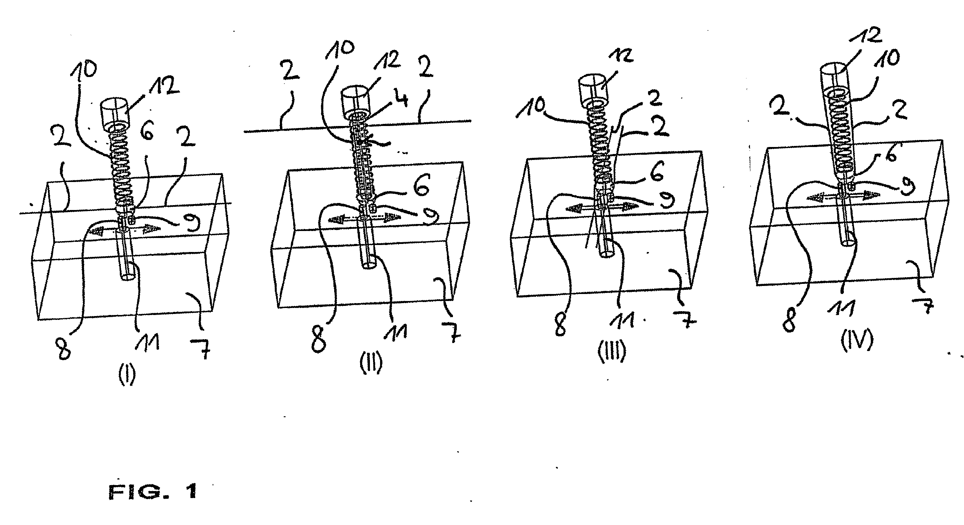

Die vorliegende Erfindung wird nachfolgend anhand von Zeichnungen beispielhaft erläutert. Dabei dienen die Darstellungen der Figuren 1 (I), 1 (II) und 1 (IV) lediglich der allgemeinen Erläuterung des technologischen Hintergrundes, lediglich das Ausführungsbeispiel der Figuren 1 (III) und 2 stellt ein erfindungsgemäßes Ausführungsbeispiel dar.

Hierbei zeigen:
- Fig. 1: vier prinzipielle Möglichkeiten der Anordnung von Antriebselementen aus Formgedächtnis-Legierungen bei einem Ventil und
- Fig. 2: ein detaillierteres Ausführungsbeispiel entsprechend Figur 1 (III) eines erfindungsgemäßen Ventils.

Figur 1 zeigt in den vier Teilabbildungen (I) - (IV) vier verschiedene Möglichkeiten der Anordnung der SMA-Drähte 2 des vorliegenden Betätigungsmechanismus relativ zum Grundkörper 7 sowie den als Kugel 6 ausgebildeten Ventilkörper des vorliegenden Ventils. Die vier Teilabbildungen dienen hierbei nur zur prinzipiellen Veranschaulichung, so daß weitere Elemente des Ventils wie bspw. die Befestigung der SMA-Drähte nicht dargestellt sind. Alle Teilabbildungen zeigen schematisch den Grundkörper 7 des Ventils mit der darin angeordneten Durchlassöffnung 8, die in einen Ventilauslass 11 mündet. Neben der Durchlassöffnung 8 ist eine blind endende Vertiefung 9 im Grundkörper 7, im Folgenden auch als Ventilboden bezeichnet, ausgebildet. Bei allen vier Darstellungen befindet sich die Kugel 6 in geschlossenem Ventilzustand über der Ventilöffnung 8, in offenem Ventilzustand über der Vertiefung 9. Die Kugel 6 wird in allen Fällen durch ein elastisches mechanisches Element, bspw. die in der Figur dargestellte Schraubenfeder 10, auf der gewünschten Position gehalten, so dass eine bistabile Lage der Kugel 6 erreicht wird. Die Schraubenfeder 10 ist mit ihrer Achse senkrecht zum Ventilboden 7 in der Mitte zwischen den beiden stabilen Kugelpositionen angeordnet und an einer Stellschraube 12 des Ventils befestigt. Die Bewegungsrichtung der Kugel 6 zum Öffnen und Schließen des Ventils ist mit den Doppelpfeilen angedeutet. Die Bewegung erfolgt über den durch die beiden SMA-Drähte 2 angedeuteten Betätigungsmechanismus. Die Drahtlänge dieser SMA-Drähte 2 ist so bemessen, dass sie selbst in maximal gedehntem Zustand, der sich durch die beiden Positionen der Kugel 6 ergibt, eine Dehnung von 2 % nicht überschreiten. Die Drahtstärke ist jeweils der für die Bewegung der Kugel 6 aufzubringenden Kraft angepasst. Je größer diese aufzuwendende Kraft ist, desto dicker müssen die SMA-Drähte 2 ausgebildet sein.

In der einfachsten Ausgestaltung des Betätigungsmechanismus wird die Verschiebung der Kugel 6 zwischen den beiden Positionen durch direkte Zusammenziehung des SMA-Drahtes in der gewünschten Bewegungsrichtung der Kugel realisiert, wie dies beispielhaft in der Teilabbildung (I) zu erkennen ist. Die beiden zur Kugel 6 gerichteten Drahtenden können hierbei bspw. an einem geeigneten, nicht dargestellten Kugelhalter für die Kugel 6 befestigt sein. Sie erstrecken sich in dieser Darstellung auf einer gemeinsamen Linie, die der Bewegungsachse der Kugel 6 entspricht. Selbstverständlich müssen die beiden von der Kugel 6 beabstandeten Drahtenden entsprechend relativ zum Grundkörper 7, bspw. direkt an diesem Grundkörper fixiert werden. Bei Erwärmung des linken SMA-Drahtes 2 durch Beaufschlagung dieses Drahtes mit einem Strom wird die Kugel 6 auf die Durchlassöffnung 8 bewegt, wobei gleichzeitig der rechte SMA-Draht 2 gedehnt wird. Wird anschließend der rechte SMA-Draht 2 erwärmt, so bewegt sich die Kugel 6 wieder in die offene Position auf die Vertiefung 9, wobei diesmal der linke SMA-Draht wieder gedehnt wird. Auf diese Weise lässt sich durch wechselseitige Beaufschlagung des linken und des rechten Drahtes 2 eine abwechselnde Öffnung und Schließung des Ventils erreichen. Um die Kugel 6 auf diese Weise um 1,5 mm verschieben zu können, ist allerdings eine Drahtlänge von jeweils 37,5 mm erforderlich. Um eine geringe Baugröße für das Ventil zu erreichen, sollte in diesem Fall ein Umlenkmechanismus für die beiden SMA-Drähte 2 eingesetzt werden.

Kürzere, dafür jedoch dickere SMA-Drähte 2 können unter Verwendung eines Hebelmechanismus eingesetzt werden, wie er in der Teilabbildung (II) veranschaulicht ist. Bei dieser Ausgestaltung ist die Kugel 6 bzw. ein Kugelhalter für diese Kugel an einem Hebelelement 4 befestigt, dessen Hebelachse der Figur mit dem Pfeil angedeutet ist. Die beiden SMA-Drähte 2 greifen in diesem Beispiel in entgegengesetzter Richtung am Hebelelement 4 an. Durch eine derartige Ausgestaltung lassen sich mit kürzeren SMA-Drähten aufgrund der Hebelwirkung größere Verschiebewege der Kugel 6 erreichen. Allerdings ist hierzu eine größere Kraft aufzuwenden, so dass die SMA-Drähte 2 dicker gewählt werden müssen als bei den anderen Ausführungsbeispielen.

Die vorstehend beschriebenen Ausführungsformen der Figuren 1 (I), 1 (II) und 1 (IV) dienen lediglich der Erörterung des technologischen Hintergrundes, sie beschreiben keine erfindungsgemäßen Lösungen.

Im Gegensatz dazu ist eine erfindungsgemäße Lösung dargestellt in den Figuren 1 (III) und 2.

Bei dieser Ausgestaltung werden zwei parallel zueinander verlaufende SMA-Drähte 2 eingesetzt, die senkrecht zur gewünschten Bewegungsrichtung der Kugel 6 gespannt sind. Wird einer der beiden Drähte 2 durch Stromfluss erhitzt, verkürzt er sich, spannt sich an und verschiebt dabei die Kugel 6 senkrecht zum Drahtverlauf und parallel zum Ventilboden 7 auf die gewünschte Position. Durch das Verschieben der Kugel 6 wird der entgegengesetzt wirkende, nicht erhitzte Draht gedehnt und kann anschließend, sobald er erhitzt wird und sich wieder zusammenzieht, die Kugel auf ihre ursprüngliche Position zurückbewegen. Dabei wird der nun abgekühlte, zuerst aktive Draht wiederum gedehnt, und kann anschließend seinerseits wieder als Aktor wirken. Die beiden SMA-Drähte 2 müssen hierbei so angeordnet sein, dass im maximal zusammengezogenen, geradlinigen Zustand von jeweils einem der Drähte die Kugel 6 exakt auf einer der beiden gewünschten Positionen zu liegen kommt. Hierfür ist es erforderlich, dass beide SMA-Drähte 2 die Kugel 6 teilweise umspannen, wie dies aus der Figur ersichtlich ist. Selbstverständlich müssen jeweils beide Drahtenden jedes SMA-Drahtes am Grundkörper 7 oder einem entsprechend mit dem Grundkörper 7 verbundenen Trägerkörper befestigt sein. Diese Lösung erlaubt eine einfache mechanische Befestigung sowie elektrische Kontaktierung der SMA-Drähte 2, wenn diese auf einer steifen Unterlage wie bspw. einer Aluminiumoxid-Keramik befestigt werden. Die Unterlage kann gleichzeitig als Träger für Leiterbahnstrukturen für die elektrische Kontaktierung der Drähte 2 und elektronischer Bauelemente dienen. Eine gleichzeitige Befestigung und Kontaktierung kann dann durch einen gut leitfähigen Klebstoff oder durch Löten erfolgen. Auch eine Befestigung und Kontaktierung durch Feder-Klemmkontakte, die die Drähte 2 gegen die steife Unterlage drücken, ist bspw. möglich. Mit einer derartigen Ausgestaltung des Betätigungsmechanismus ist für einen Verschiebeweg von 1,5 mm lediglich eine Drahtlänge von jeweils 14,9 mm erforderlich. Diese Ausgestaltung zeichnet sich daher durch eine besonders kompakte Bauweise aus.

In der vierten Teilabbildung (IV), die wiederum nur der Erläuterung des technologischen Hintergrundes dient und keine erfindungsgemäße Ausführungsform zeigt, ist eine Ausgestaltung gezeigt, bei der die SMA-Drähte 2 beidseits der Schraubenfeder 10 und annähernd parallel zu deren Achse angeordnet sind. Sie können bspw. mit einem geeigneten metallischen Kugelhalter der Kugel 6 am Ende der Schraubenfeder 10 mechanisch verbunden sein. Werden beide Drähte 2 durch Stromfluss erhitzt, so verkürzen sie sich, ziehen die Schraubenfeder 10 zusammen und heben die Kugel 6 aus dem Ventilsitz der Durchlassöffnung 8. Wird nun die Stromzufuhr durch den linken der beiden Drähte 2 gestoppt, so dass dieser abkühlt, während der rechte Draht 2 noch kurzzeitig weiterhin von Strom durchflossen bleibt, so biegt sich die Schraubenfeder 10 in Richtung des stromdurchflossenen Drahtes und bewegt damit auch die Kugel 6 in die entsprechende Richtung. Nun wird auch die Stromzufuhr für den rechten Draht gestoppt, so dass dieser abkühlt. Die Feder 10 verlängert sich dadurch und die Kugel 6 rastet in der gewünschten stabilen Endlage der Vertiefung 9 ein. Um die Kugel 6 zurück zu bewegen, findet der zuvor beschriebene Vorgang nochmals statt. Allerdings muss nun der rechte Draht zuerst abgekühlt werden. Die Schraubenfeder 10 krümmt sich dann in der entgegengesetzten Richtung und die Kugel 6 rastet nach dem Abkühlen in der zweiten Position über der Durchlassöffnung 8 ein. Auch diese Ausgestaltung lässt sich in einer sehr kompakten Bauweise realisieren. Grundsätzlich lässt sich mit den beiden Ausgestaltungen der Teilabbildungen (III) und (IV) bei minimalem Bauraum der Energieverbrauch zum einmaligen Betätigen des Ventils auf unter 5 mWs begrenzen. Dies gilt für eine Ausgestaltung des Ventils mit einer Saphirkugel 6 mit einem Durchmesser von ca. 3 mm, die zwischen den beiden stabilen Positionen um eine Distanz von ca. 1,5 mm bewegt werden muss.

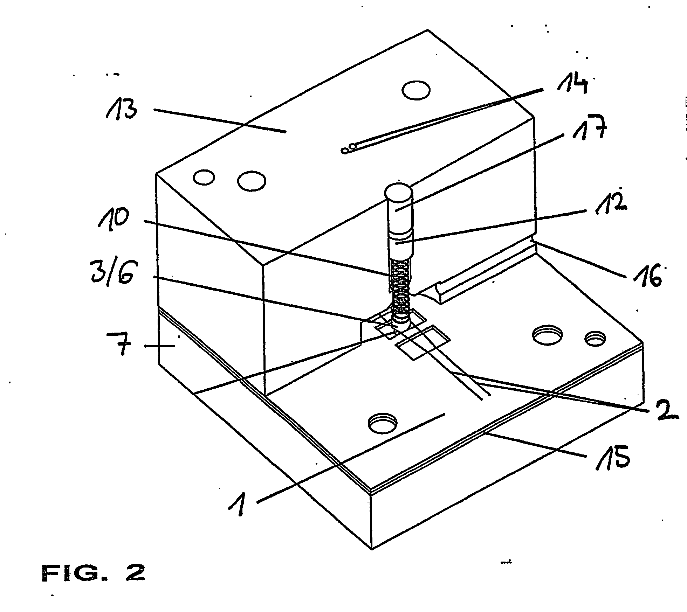

Figur 2 zeigt eine detailliertere Darstellung eines Ausführungsbeispiels des vorliegenden Kugelventils in Halbquerschnittsdarstellung, bei der die SMA-Drähte 2 gemäß der Ausgestaltung der Teilabbildung (III) der Figur 1 angeordnet sind. Die freien Enden der SMA-Drähte 2 werden in diesem Ausführungsbeispiel auf einer Trägerplatte 1 aus Aluminiumoxid-Keramik festgeklebt und über CuBe-Klemmkontakte kontaktiert, die aus dem Ventil herausgeführt werden. Die Kontaktierung ist in dieser Darstellung nicht zu erkennen, lediglich die aus dem Deckel 13 des Ventils herausragenden CuBe-Kontaktfedern 14. Die Trägerplatte 1 ist auf dem Grundkörper 7 des Ventils befestigt, wobei zwischen dem Grundkörper 7 und der Trägerplatte 1 eine Silikon-Dichtscheibe 15 angeordnet ist. Über der Durchlassöffnung 8 für den Flüssigkeitsabfluss des Grundkörpers 7 müssen selbstverständlich entsprechende Ausnehmungen in der Trägerplatte 1 und der Silikon-Dichtscheibe 15 vorgesehen sein, wie dies in der Figur zu erkennen ist. Auf die Trägerplatte 1 wird ein Deckel 13 des Ventils aufgesetzt, in den ein Flüssigkeitszufuhrkanal 16 für die Zufuhr der Flüssigkeit zur Durchlassöffnung 8 ausgebildet ist. In den Deckel 13 sind weiterhin eine Stellschraube 12 für die Befestigung der Schraubenfeder 10 sowie eine darüber befindliche Dichtschraube 17 integriert. Die Schraubenfeder 10 drückt die Kugel 6 gegen die Durchlassöffnung 8 bzw. die in dieser Figur nicht erkennbare Vertiefung 9. Über die Stellschraube 12 kann der Anpressdruck der Kugel 6 gegen die Durchlassöffnung 8 bzw. die Vertiefung 9 eingestellt werde. Durch Beaufschlagung der SMA-Drähte 2 mit einem geeigneten Stromfluss lässt sich die Kugel 6 wechselseitig in die offene und geschlossene Position bringen. Aus der Figur ist ersichtlich, dass der Betätigungsmechanismus, der im Wesentlichen aus den auf der Trägerplatte 1 befestigten SMA-Drähten 2 und deren elektrischer Kontaktierung 14 besteht, nur minimalen Bauraum beansprucht.

### Bezugszeichenliste

- 1: Trägerkörper bzw. Trägerplatte
- 2: drahtförmige Elemente (SMA-Drähte)
- 3: beweglicher Ventilkörper
- 4: Hebelelement
- 5: Führungselement, bspw. Kugelhalter
- 6: Kugel
- 7: Grundkörper bzw. Ventilboden
- 8: Durchlassöffnung
- 9: Vertiefung
- 10: elastisches Element, bspw. Schraubenfeder
- 11: Ventilauslass
- 12: Stellschraube
- 13: Deckel
- 14: CuBe-Kontaktfedern
- 15: Silikon-Dichtscheibe
- 16: Flüssigkeitszufuhrkanal
- 17: Dichtschraube
- 18: Metalleinsatz

## Patentansprüche

1. Ventil, das einen Grundkörper (7) mit einer Durchlaßöffnung (8), einen beweglichen Ventilkörper (3) zum Verschließen und Freigeben der Durchlaßöffnung (8) und einen Betätigungsmechanismus umfaßt, mit dem der Ventilkörper (3) zum Freigeben der Durchlaßöffnung (8) bewegt werden kann, wobei der Betätigungsmechanismus zumindest zwei am Grundkörper (7) oder einem damit verbundenen Trägerkörper (1) befestigte drahtförmige Elemente (2) aus einer Formgedächtnislegierung aufweist, die sich bei Temperaturerhöhung auf eine Temperatur oberhalb einer Schwelltemperatur wechselseitig verkürzen lassen und so mit dem Ventilkörper (3) in Wirkverbindung stehen, daß der Ventilkörper (3) bei einseitiger Verkürzung des einen Elementes (2) von einer stabilen Lage auf der Durchlaßöffnung (8) in eine stabile Lage neben der Durchlaßöffnung (8) und bei einseitiger Verkürzung des anderen Elementes (2) wieder in die stabile Lage auf der Durchlaßöffnung (8) bewegt werden kann, **dadurch gekennzeichnet, daß** sich die beiden drahtförmigen Elemente (2) annähernd parallel zueinander und senkrecht zu einer Bewegungsrichtung des Ventilkörpers (3) erstrecken und den zwischen den beiden drahtförmigen Elementen (2) angeordneten Ventilkörper (3) derart umspannen, daß sich der Ventilkörper (3) bei verkürztem, geradlinigem Zustand des einen Elementes auf der Durchlaßöffnung (8) und bei verkürztem, geradlinigem Zustand des anderen Elementes neben der Durchlaßöffnung (8) befindet.

2. Ventil nach Anspruch 1, **dadurch gekennzeichnet, daß** die beiden drahtförmigen Elemente (2) direkt am Ventilkörper (3) befestigt sind.

3. Ventil nach einem der Ansprüche 1 oder 2, **dadurch gekennzeichnet, daß** die beiden drahtförmigen Elemente (2) an einem Führungselement (5) zur Führung des Ventilkörpers (3) befestigt sind.

4. Ventil nach einem der voranstehenden Ansprüche, **dadurch gekennzeichnet, daß** der Ventilkörper (3) eine Kugel (6) ist.

5. Ventil nach Anspruch 4, **dadurch gekennzeichnet, daß** im Grundkörper (7) eine Vertiefung (9) neben der Durchlaßöffnung (8) ausgebildet ist, die als Sitz für die Kugel (6) im geöffneten Zustand des Ventils dient.

6. Ventil nach einem der Ansprüche 4 oder 5, **dadurch gekennzeichnet, daß** die Kugel (6) mit einem elastischen Element (10), insbesondere einer Schraubenfeder, in Verbindung steht, mit dem sie jeweils gegen die Durchlaßöffnung (8) beziehungsweise die Vertiefung (9) des Grundkörpers (7) gedrückt wird.

7. Ventil nach einem der voranstehenden Ansprüche, **dadurch gekennzeichnet, daß** die beiden drahtförmigen Elemente (2) ohmsche Widerstände bilden, so daß sie durch Beaufschlagung mit einem Strom über die Schwelltemperatur erwärmt werden können.

## Claims

1. A valve, which comprises a base body (7) with a passage opening (8), a movable valve member (3) for closing and opening the passage opening (8) and an actuating mechanism, by which the valve member (3) can be moved in order to open the passage opening (8), the actuating mechanism having at least two elements (2) in wire form made from a shape memory alloy, which are secured to the base body (7) or a carrier body (1) connected thereto and can be shortened alternately in the event of the temperature rising to a temperature above a threshold temperature and are operatively connected to the valve member (3) in such a way that the valve member (3) can be moved from a stable position on the passage opening (8) into a stable position beside the passage opening (8) in the event of shortening on one side of one of the elements (2), and can be moved back into the stable position on the passage opening (8) in the event of shortening on one side of the other element (2), **characterized in that** the two elements (2) in wire form extend approximately parallel to one another and perpendicular to a direction of movement of the valve member (3) and surround the valve member (3) disposed between the two elements (2) in wire form in such a manner that the valve member (3) is located on the passage opening (8) in the shortened, rectilinear state of one of the elements and is located alongside the passage opening (8) in the shortened, rectilinear state of the other element.

2. A valve according to Claim 1, **characterized in that** the two elements (2) in wire form are secured directly to the valve member (3).

3. A valve according to either of Claims 1 or 2, **characterized in that** the two elements (2) in wire form are secured to a guide element (5) for guiding the valve member (3).

4. A valve according to any of the preceding claims, **characterized in that** the valve member (3) is a ball (6).

5. A valve according to Claim 4, **characterized in that** a recess (9) is formed in the base body (7) next to the passage opening (8), which recess serves as a seat for the ball (6) in the opened state of the valve.

6. A valve according to either of Claims 4 or 5, **characterized in that** the ball (6) is connected to an elastic element (10), in particular a coil spring, by which it is respectively pressed onto the passage opening (8) or the recess (9) in the base body (7).

7. A valve according to any of the preceding claims, **characterized in that** the two elements (2) in wire form form ohmic resistors, so that they can be heated to above the threshold temperature by the application of a current.

## Revendications

1. Vanne comprenant un corps de base (7) avec une ouverture de passage (8), un corps de vanne (3) mobile pour la fermeture et le déblocage de l'ouverture de passage (8), et un mécanisme d'actionnement au moyen duquel le corps de vanne (3) peut être déplacé pour le déblocage de l'ouverture de passage (8), où le mécanisme d'actionnement comporte au moins deux éléments (2) en forme de fils métalliques en alliage à mémoire de forme, fixés sur le corps de base (7) ou sur un corps de support (1) raccordé à celui-ci, lesquels se laissent raccourcir alternativement en cas d'élévation de température jusqu'à dépassement d'une température limite et sont en liaison active avec le corps de vanne (3) de manière à pouvoir déplacer le corps de vanne (3) d'une position stable sur l'ouverture de passage (8) vers une position stable à côté de l'ouverture de passage (8) en cas de raccourcissement unilatéral du premier élément (2), et à ramener celui-ci vers la position stable sur l'ouverture de passage (8) en cas de raccourcissement unilatéral de l'autre élément (2), **caractérisé en ce que** les deux éléments (2) en forme de fils métalliques s'étendent sensiblement parallèlement l'un à l'autre et perpendiculairement à une direction de déplacement du corps de vanne (3) et enserrent le corps de vanne (3) disposé entre les deux éléments (2) en forme de fils métalliques de telle manière que le corps de vanne (3) se trouve sur l'ouverture de passage (8) en cas d'état de raccourcissement en ligne droite du premier élément, et à côté de l'ouverture de passage (8) en cas d'état de raccourcissement en ligne droite de l'autre élément.

2. Vanne selon la revendication 1, **caractérisée en ce que** les deux éléments (2) en forme de fils métalliques sont directement fixés sur le corps de vanne (3).

3. Vanne selon l'une des revendications 1 et 2, **caractérisée en ce que** les deux éléments (2) en forme de fils métalliques sont fixés sur un élément de guidage (5) pour le guidage du corps de vanne (3).

4. Vanne selon l'une des revendications précédentes, **caractérisée en ce que** le corps de vanne (3) est une bille (6).

5. Vanne selon la revendication 4, **caractérisée en ce qu'**un évidement (9) est ménagé à côté de l'ouverture de passage (8) dans le corps de base (7), lequel sert de siège pour la bille (6) en état d'ouverture de la vanne.

6. Vanne selon l'une des revendications 4 et 5, **caractérisée en ce que** la bille (6) est reliée à un élément élastique (10), en particulier un ressort à boudin, au moyen duquel elle est serrée contre l'ouverture de passage (8) ou contre l'évidement (9) du corps de base (7).

7. Vanne selon l'une des revendications précédentes, **caractérisée en ce que** les deux éléments (2) en forme de fils métalliques forment des résistances ohmiques, de manière à pouvoir être chauffées au-delà de la température limite par application d'un courant.
